# FASCICULE DE BREVET EUROPEEN

(11) **EP 3 469 400 B1**
(45) Date de publication et mention de la délivrance du brevet: **17.02.2021**
(21) Numéro de dépôt: 17732525.5
(22) Date de dépôt: 09.06.2017
(51) Int. Cl.: G01S 19/39, G01S 5/00, G01S 5/30

(54) **DISPOSITIF ET PROCÉDÉ DE POSITIONNEMENT D'UN DISPOSITIF SOUS-MARIN**
VORRICHTUNG UND VERFAHREN ZUR POSITIONIERUNG EINER UNTERWASSERVORRICHTUNG
DEVICE AND METHOD FOR POSITIONING AN UNDERWATER DEVICE

(30) Priorité: 09.06.2016 FR 1655306
(43) Date de publication de la demande: 17.04.2019
(73) Titulaire: Submarine Open Technologies, 34000 Montpellier (FR)
(72) Inventeur: CODOL, Jean-Marie, 34970 LATTES (FR); CHANZY, Moïra, 34970 LATTES (FR)
(74) Mandataire: Cornuejols, Georges
(86) Numéro de dépôt international: PCT/FR2017/051458
(87) Numéro de publication internationale: WO 2017/212182

(56) Documents cités:
- WO-A1-94/14081
- FR-A1- 2 785 993
- US-A- 5 119 341
- US-A- 5 331 602
- US-A1- 2009 196 122

## Description

### DOMAINE TECHNIQUE DE L'INVENTION

La présente invention vise un dispositif et un procédé de positionnement d'un dispositif sous-marin. Elle s'applique, notamment, à la localisation de plongeurs ou de drones sous la surface de la mer.

### ETAT DE LA TECHNIQUE

Déterminer la position de plongeurs dans une étendue d'eau douce ou marine représente un défi technique du fait des obstacles que représentent ces milieux pour la transmission d'ondes électromagnétiques.

Les conséquences de cette problématique de positionnement peuvent être la perte d'un plongeur s'étant égaré par rapport à un groupe de plongeur ou par rapport à l'embarcation de transport du ou des plongeurs. D'autre part, le plongeur doit pouvoir atteindre un lieu de plongée le plus rapidement possible un lieu de plongée, ce qui implique d'indiquer la position de ce lieu au plongeur.

On connaît le principe du GPS (pour « Global Positioning System », traduit par système de positionnement global), dans lequel une pluralité de satellites émettent des signaux électromagnétiques captés par un récepteur terrestre, ce récepteur déterminant sa position dans le référentiel des satellites par calcul des distances le séparant de chaque satellite. La position des satellites étant par ailleurs connue, il est possible de déterminer la position du récepteur dans le référentiel terrestre.

Toutefois, dans la pratique, la transmission des signaux émis par les satellites à travers l'ionosphère implique une distorsion des signaux résultant en une erreur de positionnement pouvant aller jusqu'à une dizaine de mètres.

Pour compenser cet effet, les systèmes dits de GPS différentiel mettent en œuvre, au niveau terrestre, une station de réception de référence qui, comme le récepteur, calcule les distances à chaque satellite. Ces distances calculées sont ensuite transmises au récepteur qui calcule sa position relativement à la station de réception de référence, négligeant ainsi l'impact du délai ionosphérique. L'erreur de positionnement est alors de l'ordre du mètre.

Dans le domaine de la localisation de dispositifs sous-marins, on connaît des systèmes mettant en œuvre une pluralité de bouées munies d'un capteur de position GPS et d'un émetteur de signaux acoustiques sous-marins transmettant la position calculée par cette bouée.

Toutefois, dans ces systèmes, chaque bouée présente une erreur de positionnement de l'ordre de dix mètres, et transmet cette erreur au dispositif sous-marin avec une erreur additionnelle due à la transmission de signaux sous-marins. Ainsi, la précision du positionnement déterminé avec ces systèmes est faible.

On connaît des systèmes plus perfectionnés mettant en œuvre le principe de fonctionnement du GPS différentiel, dans lequel l'une des bouées est considérée comme station de réception de référence. Ces systèmes nécessitent néanmoins la présence de radio aérienne reliant les bouées pour que la bouée de référence transmette son positionnement aux autres bouées. De plus, la bouée de référence doit être choisie avant le début du processus et l'architecture du système se complexifie avec le nombre de bouées de surface.

Dans d'autres systèmes actuels, tels que ceux décrits dans le brevet américain US 8,654,610 :
- un flotteur positionné à la surface de l'étendue d'eau détermine sa position en fonction d'un signal à radiofréquences reçu,
- ce flotteur est relié à un réseau d'émetteurs positionnés sur une structure rigide immergée dans l'étendue d'eau, chaque émetteur émettant l'information de position du flotteur selon une horloge commune par signaux sonores,
- un récepteur des signaux sonores émis détermine sa position à partir de l'information de position émise par chaque émetteur et par mesure d'un décalage d'horloge de chaque signal, identique, reçu.

Ces systèmes présentent plusieurs inconvénients :
- le transport d'une structure rigide sur l'embarcation en réduit l'espace à bord,
- la transmission d'une information de positionnement implique l'émission de messages longs dans la durée et donc susceptibles d'être erronés ou de ne pas parvenir au récepteur,
- le flotteur est souvent unique, ce qui induit une ligne de visée faible, limitant la précision du positionnement,
- lorsque le système comporte plusieurs flotteurs, ces flotteurs présentent une précision relative de positionnement de chaque flotteur de l'ordre du mètre, ce qui limite la précision globale du système.

Un autre système actuel est décrit dans la demande de brevet US 5 331 602.

### OBJET DE L'INVENTION

La présente invention vise à remédier à tout ou partie de ces inconvénients.

A cet effet, selon un premier aspect, la présente invention vise un système de positionnement d'un dispositif sous-marin, qui comporte :
- au moins deux transpondeurs de surface, chaque transpondeur de surface comportant un récepteur de signaux radio émis par au moins deux sources satellitaires de signaux d'un système de géolocalisation,
- chaque transpondeur de surface comportant :
   - un moyen d'estimation d'au moins une pseudo-distance radio entre le transpondeur de surface et au moins deux sources de signaux du système de géolocalisation,
   - une fixation à un flotteur configuré pour présenter une flottabilité nulle à une profondeur dédiée et
   - un moyen de communication d'informations représentatives des pseudo-distances radio vers le dispositif sous-marin, et
   - un émetteur acoustique sous-marin synchronisé sur le temps du système de géolocalisation configuré pour transmettre un signal acoustique vers le dispositif sous-marin,
- le dispositif sous-marin comportant :
   - un moyen de réception d'informations représentatives des pseudo-distances radio émises par au moins deux transpondeurs de surface,
   - un récepteur de signaux acoustiques configuré pour recevoir les signaux acoustiques émis par au moins deux transpondeur de surface,
   - un moyen de détermination d'une ou plusieurs pseudo-distances acoustiques entre au moins deux émetteurs acoustiques sous-marin et le dispositif sous-marin et
   - un moyen de calcul de la position du dispositif dans un référentiel terrestre centré sur l'un des transpondeurs de surface, le moyen de calcul de la position comportant une unité de calcul exécutant un processus d'estimation probabiliste réalisant cette estimation à l'aide au minimum des mesures suivantes :
      - une sélection des informations représentative des pseudo-distances radio reçues par le moyen de réception,
      - une sélection de pseudo-distances acoustiques déterminées par le moyen de détermination.

Grâce à ces dispositions, aucune bouée de référence n'est nécessaire, et l'architecture du système n'est pas complexifiée avec l'ajout de transpondeur de surface. Dans ce système, le calcul du positionnement des transpondeurs est réalisé directement au niveau du dispositif sous-marin, ce qui permet d'éliminer les erreurs de positionnement dus aux effets ionosphériques.

Dans des modes de réalisation, au moins un émetteur acoustique sous-marin est synchronisé sur une horloge interne du récepteur radio du système de géolocal isation.

Ces modes de réalisation permettent de reproduire l'effet Doppler des signaux satellitaires dans le cas de GPS. L'effet Doppler fait varier la fréquence des signaux de manière aléatoire, en fonction du déplacement des satellites. Altérer la source acoustique en fonction de l'horloge interne du récepteur GPS permet de faire fonctionner le système de localisation avec des fréquences considérées comme identiques mais altérées aléatoirement par le biais dynamique de l'horloge interne du récepteur GPS.

Dans des modes de réalisation, l'émetteur acoustique et le moyen de communication sont confondus, l'émetteur acoustique communicant des informations représentatives des pseudo-distances radio vers le dispositif sous-marin.

Ces modes de réalisation permettent de limiter le nombre de moyens mis en œuvre pour réaliser le système.

Dans des modes de réalisation, le récepteur et le moyen de réception d'un dispositif sous-marin sont confondus, le récepteur recevant des informations représentatives des pseudo-distances radio émises par au moins deux transpondeurs de surface.

Dans des modes de réalisation :
- chaque émetteur d'un transpondeur de surface émet par voie acoustique une combinaison linéaire de plusieurs signaux périodiques sur plusieurs canaux a raison d'un canal pour une pseudo-distance à émettre, chaque canal étant soit un signal d'horloge dans le temps du système de géolocalisation, soit la représentation de l'une des pseudo-distances radio dont l'information est à émettre, chaque signal périodique étant temporellement décalé en fonction de la valeur de la pseudo-distance radio à émettre et
- le récepteur acoustique reconstitue les informations représentatives des pseudo-distances radio, par comparaison des temps d'arrivée des différents signaux acoustiques sur les différents canaux acoustiques.

Ces modes de réalisation permettent de transmettre les informations de pseudo-distances sans que ces informations ne soient binarisées. La transmission des informations est réalisée par l'adaptation d'un paramètre de la transmission.

Dans des modes de réalisation, au moins un transpondeur de surface comporte au moins deux émetteurs acoustiques sous-marins.

Ces modes de réalisation permettent au système de fonctionner avec un seul transpondeur.

Dans des modes de réalisation, le système objet de la présente invention comporte une structure de fixation des au moins deux dits émetteurs acoustiques sous-marins, le transpondeur de surface comportant un moyen de détermination de la position de ces émetteurs acoustiques sous-marins dans le référentiel terrestre relativement au récepteur des signaux émis par les sources satellitaires, et un moyen de calcul mettant en œuvre les opérations suivantes :
- une mesure de valeurs de pseudo-distances radio théoriques simulant un positionnement identique du récepteur radio et des émetteurs acoustiques sous-marins et
- une émission de commande d'envoi des mesures théoriques de valeurs de pseudo-distances radio, par chaque émetteur.

Ces modes de réalisation permettent au système de fonctionner avec un seul transpondeur.

Dans des modes de réalisation, au moins un transpondeur de surface comporte un moyen de détermination d'une position par rapport au système de géolocalisation, l'émetteur transmettant une information représentative de la position déterminée vers le dispositif sous-marin, le moyen de calcul du dispositif sous-marin étant configuré pour calculer une position par rapport au référentiel du système de géolocal isation.

Dans des modes de réalisation, le système objet de la présente invention comporte au moins deux dispositifs sous-marins.

Dans des modes de réalisation, au moins un transpondeur de surface comporte un moyen de communication configuré pour recevoir, depuis au moins un dispositif sous-marin dit « principal », la position d'un ou plusieurs dispositifs sous-marin, et de retransmettre ces informations représentatives de la position d'un ou plusieurs dispositifs sous-marins vers au moins un deuxième dispositif sous-marin, les dispositifs sous-marin dit « principaux » étant configurés pour transmettre une information représentative de la position d'au moins un dispositif sous-marin vers au moins un transpondeur de surface.

Dans des modes de réalisation, au moins un dispositif sous-marin comporte un moyen de communication d'une information représentative de la position calculée vers au moins un deuxième dispositif sous-marin dit « principal ».

Dans des modes de réalisation, au moins un dispositif sous-marin comporte un moyen d'affichage d'une information de positionnement d'au moins un dispositif sous-marin.

Dans des modes de réalisation, le système objet de la présente invention comporte un moyen d'affichage, positionné au-dessus de la surface, d'une information représentative de la position d'un ou plusieurs dispositifs sous-marins.

Dans des modes de réalisation, au moins un dispositif sous-marin comporte au moins un capteur supplémentaire parmi :
- un capteur de profondeur,
- une centrale inertielle et
- un magnétomètre,
le moyen de calcul de la position du dispositif comportant une unité de calcul exécutant un processus d'estimation probabiliste réalisant cette estimation à l'aide au minimum des mesures suivantes :
- une sélection des informations représentative des pseudo-distances radio reçues par le moyen de réception,
- une sélection de pseudo-distances acoustiques déterminées par le moyen de détermination et
- une sélection de mesures issues d'au moins un dit capteur supplémentaire.

Dans des modes de réalisation, au moins un dispositif est embarqué dans un bracelet.

Selon un deuxième aspect, la présente invention vise un procédé de positionnement d'un dispositif sous-marin, caractérisé en ce qu'il comporte :
- une étape de réception, par au moins deux transpondeurs de surface, de signaux radio émis par au moins deux sources satellitaires de signaux d'un système de géolocalisation,
- une étape d'estimation d'au moins une pseudo-distance radio entre le transpondeur de surface et au moins deux sources de signaux du système de géolocalisation,
- une étape de fixation d'un transpondeur à un flotteur configuré pour présenter une flottabilité nulle à une profondeur dédiée et
- une étape de communication, par un transpondeur, d'informations représentatives des pseudo-distances radio vers le dispositif sous-marin,
- une étape d'émission acoustique sous-marine, par un transpondeur, synchronisée sur le temps du système de géolocalisation configuré pour transmettre un signal acoustique vers le dispositif sous-marin,
- une étape de réception d'informations, par un moyen de réception du dispositif sous-marin, représentatives des pseudo-distances radio émises par au moins deux transpondeurs de surface,
- une étape de réception de signaux acoustique, par un récepteur du dispositif sous-marin, des signaux acoustiques émis par au moins deux transpondeur de surface,
- une étape de détermination d'une ou plusieurs pseudo-distances acoustiques entre au moins deux émetteurs acoustiques sous-marin de transpondeurs de surface et le dispositif sous-marin et
- une étape de calcul de la position du dispositif dans un référentiel terrestre centré sur l'un des transpondeurs de surface, le moyen de calcul de la position comportant une unité de calcul exécutant un processus d'estimation probabiliste réalisant cette estimation à l'aide au minimum des mesures suivantes :
   - une sélection des informations représentative des pseudo-distances radio reçues par le moyen de réception,
   - une sélection de pseudo-distances acoustiques déterminées par le moyen de détermination.

Les buts, avantages et caractéristiques particulières du procédé objet de la présente invention étant similaires à ceux du dispositif objet de la présente invention, ils ne sont pas rappelés ici.

### BREVE DESCRIPTION DES FIGURES

D'autres avantages, buts et caractéristiques particulières de l'invention ressortiront de la description non limitative qui suit d'au moins un mode de réalisation particulier du système et du procédé objets de la présente invention, en regard des dessins annexés, dans lesquels :
- la figure 1 représente, schématiquement, un premier mode de réalisation particulier du dispositif objet de la présente invention et
- la figure 2 représente, schématiquement et sous forme d'un logigramme, une succession d'étapes particulière du procédé objet de la présente invention.

### DESCRIPTION D'EXEMPLES DE REALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note dès à présent que les figures ne sont pas à l'échelle.

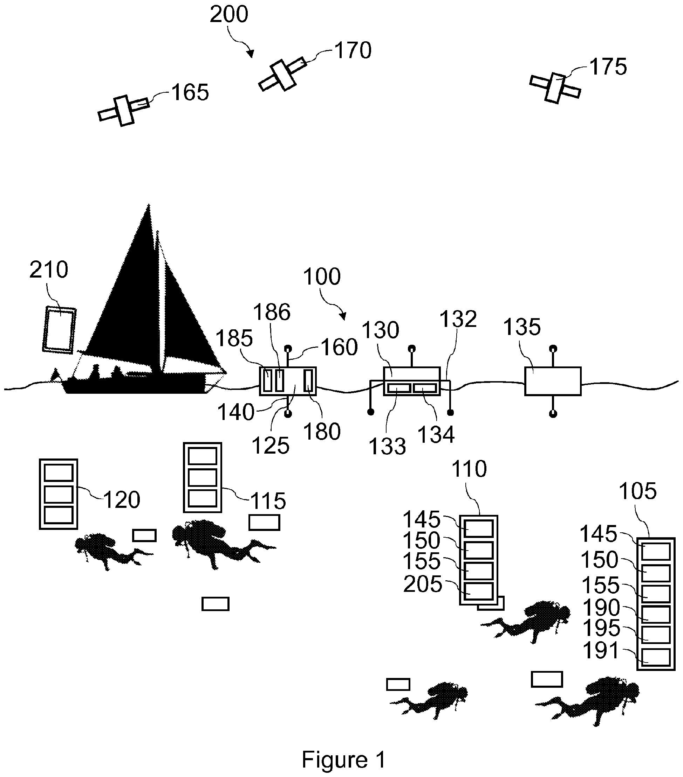

On observe, sur la figure 1, qui n'est pas à l'échelle, une vue schématique d'un mode de réalisation du système 100 objet de la présente invention. Ce système 100 de positionnement d'un dispositif, 105, 110, 115 et/ou 120, sous-marin, comporte :
- au moins deux transpondeurs, 125, 130 et/ou 135, de surface, chaque transpondeur de surface comportant un récepteur 160 de signaux radio émis par au moins deux sources, 165, 170 et/ou 175, satellitaires de signaux d'un système 200 de géolocalisation,
- chaque transpondeur de surface comportant :
   - un moyen 180 d'estimation d'au moins une pseudo-distance radio entre le transpondeur de surface et au moins deux sources de signaux du système de géolocalisation,
   - une fixation 185 à un flotteur configuré pour présenter une flottabilité nulle à une profondeur dédiée et
   - un moyen 140 de communication d'informations représentatives des pseudo-distances radio vers le dispositif sous-marin, et
   - un émetteur 140 acoustique sous-marin synchronisé sur le temps du système de géolocalisation configuré pour transmettre un signal acoustique vers le dispositif sous-marin,
- le dispositif sous-marin comportant :
   - un moyen 145 de réception d'informations représentatives des pseudo-distances radio émises par au moins deux transpondeurs de surface,
   - un récepteur 145 de signaux acoustiques configuré pour recevoir les signaux acoustiques émis par au moins deux transpondeur de surface,
   - un moyen 150 de détermination d'une ou plusieurs pseudo-distances acoustiques entre au moins deux émetteurs acoustiques sous-marin et le dispositif sous-marin et
   - un moyen 155 de calcul de la position du dispositif dans un référentiel terrestre centré sur l'un des transpondeurs de surface, le moyen de calcul de la position comportant une unité de calcul exécutant un processus d'estimation probabiliste réalisant cette estimation à l'aide au minimum des mesures suivantes :
      - une sélection des informations représentative des pseudo-distances radio reçues par le moyen de réception,
      - une sélection de pseudo-distances acoustiques déterminées par le moyen de détermination.

Chaque transpondeur, 125, 130 et 135, est, par exemple, un circuit électronique monté sur une bouée ou fixé à une structure flottante ou à une embarcation.

La fixation 185 peut être de tout type connu de l'homme du métier, telle par exemple une fixation par clouage, vissage, enclipsage ou encordage.

Chaque récepteur 160 de signaux est, par exemple, une antenne configurée pour recevoir des signaux électromagnétiques émis par chaque source, 165, 170 et 175, satellitaires du système 200 de géolocalisation.

Ce système 200 de géolocalisation est, par exemple, le système GPS.

Le moyen d'estimation 180 est, par exemple, un circuit électronique de calcul configuré pour calculer une pseudo-distance entre le transpondeur, 125, 130 ou 135, et chaque source, 165, 170 et/ou 175, dont le signal a été reçu par le récepteur 160.

Pour estimer chaque pseudo-distance, le moyen d'estimation 180 :
- calcule la différence de temps entre le signal émis par une source, 165, 170 ou 175 et une réplique locale de ce même signal, reconstitué de manière synchronisée avec l'horloge locale au transpondeur, 125, 130 ou 135,
- calcule la pseudo-distance en multipliant une constante de vitesse de propagation des ondes, telles la valeur de la célérité de la lumière dans le vide par exemple, par la différence temporelle entre le signal reçu et la réplique locale.

Les horloges de chaque transpondeur, 125, 130, 135, sont indépendantes. Mais il est possible à partir de l'estimateur de pseudo-distances radio, de générer une horloge synchronisée avec le système 200 de géolocalisation.

Le moyen de communication 140 est, par exemple, une antenne configurée pour émettre des signaux électromagnétiques en direction d'au moins un dispositif sous-marin, 105, 110, 115 et/ou 120.

Toutefois, du fait des contraintes de propagation en milieu sous-marin, ce moyen de communication 140 est préférentiellement un transducteur électro-acoustique configuré pour émettre des signaux acoustiques représentatifs de signaux électriques.

Ainsi, comme on le comprend, dans ce mode de réalisation, le moyen de communication 140 ne communique pas une position déterminée du transpondeur, 125, 130 ou 135, au dispositif sous-marin, 105, 110, 115 ou 120, mais seulement les pseudo-distances déterminées.

L'émetteur 140 est, par exemple, un transducteur électro-acoustique configuré pour émettre des signaux acoustiques représentatifs de signaux électriques.

Ces signaux sont, par exemple, représentatifs de directions dans un espace en trois dimensions de chaque satellite, et la position d'une embarcation éventuellement.

Dans des modes de réalisation, au moins un émetteur 140 acoustique sous-marin, 105, 110, 115 et/ou 120, est synchronisé sur une horloge interne du récepteur 160 radio du système 200 de géolocalisation.

Dans des variantes préférentielles, l'émetteur 140 et le moyen de communication 140 sont confondus.

Chaque dispositif sous-marin, 105, 110, 115 et 120, comporte un moyen 145 de réception d'informations représentatives des pseudo-distances radio émises par au moins deux transpondeurs, 125, 130 et/ou 135, de surface.

Ce moyen de réception 145 est, par exemple, un transducteur électro-acoustique configuré pour transformer des signaux acoustiques en signaux électriques. Ces signaux électriques sont représentatifs d'une pseudo-distance estimée par le transpondeur, 125, 130 ou 135, ayant émis les signaux acoustiques correspondants.

Chaque dispositif sous-marin, 105, 110, 115 et 120, comporte un récepteur 145 de signaux acoustiques configuré pour recevoir les signaux acoustiques émis par au moins deux transpondeur de surface, 125, 130 et/ou 135.

Le récepteur 145, est, par exemple, une antenne configurée pour recevoir des signaux électromagnétiques émis par un émetteur 140.

Quelle que soit la technologie, norme ou le standard mis en œuvre par l'émetteur 140, le récepteur 145 met en œuvre la même technologie, norme, ou le même standard de manière complémentaire.

Dans des variantes, l'émetteur 140 et le récepteur 145 sont reliés par un câble électrique souple ou par transmission d'ondes infrarouges.

Dans des variantes préférentielles, le récepteur 145 est un transducteur électro-acoustique configuré pour transformer des signaux acoustiques en signaux électriques.

Dans des variantes préférentielles, le récepteur 145 et le moyen de réception 145 sont confondus.

Dans des variantes, la communication entre un dispositif sous-marin, 105, 110, 115 et/ou 120, avec un transpondeur de surface, 125, 130 et/ou 135, est bidirectionnelle.

Le moyen de détermination 150 est, par exemple, un circuit électronique de calcul fonctionnant de manière analogue au moyen d'estimation 180 de chaque transpondeur, 125, 130 et 135.

Pour estimer chaque pseudo-distance, le moyen de détermination 150 :
- calcule la différence de temps entre le signal émis par une source125, 130 ou 135 et une réplique locale de ce même signal, reconstitué de manière synchronisée avec l'horloge locale au niveau du dispositif sous-marin, 105, 110, 115 ou 120,
- calcule la pseudo-distance en multipliant une constante de vitesse de propagation des ondes, telles la valeur de la célérité du son dans l'eau marine par exemple, par la différence temporelle entre le signal reçu et la réplique locale.

Les horloges de chaque dispositif sous-marin, 105, 110, 115 ou 120, sont par exemple synchronisées sur l'horloge des transpondeurs, 125, 130 et 135, préférentiellement synchronisées sur l'horloge du système 200 de géolocalisation.

Le moyen de calcul 155 de chaque dispositif sous-marin, 105, 110, 115 et 120, est, par exemple, un circuit électronique de calcul configuré pour :
- calculer, par trilatération, le positionnement du dispositif sous-marin, 105, 110, 115 ou 120, par rapport à chaque transpondeur, 125, 130 et/ou 135, pour lequel une pseudo-distance a été déterminée par le moyen de détermination 150,
- calculer, par trilatération, le positionnement de chaque transpondeur, 125, 130 et/ou 135, pour lequel une pseudo-distance a été déterminée par le moyen de détermination 150, par rapport aux sources, 165, 170 et/ou 175, du système de géolocalisation 200,
- calculer, par transitivité, le positionnement du dispositif sous-marin, 105, 110, 115 ou 120, par rapport aux sources, 165, 170 et ou 175, satellitaires du système de géolocalisation 200

Le processus d'estimation probabiliste est exécuté sur le moyen 155 de calcul de la position du dispositif. Le processus réalise, par exemple, les opérations suivantes :
- la construction progressive d'un vecteur d'état, chaque élément du vecteur d'état étant une variable numérique mono ou multidimensionnelle ayant une valeur numérique. On peut citer les variables suivantes : à chaque instant une nouvelle position en trois dimensions du dispositif, 105, 110, 115 ou 120, sous-marin exécutant l'estimation probabiliste par rapport aux sources, 165, 170 et ou 175, satellitaires du système de géolocalisation 200, les différences d'horloges, en secondes, entre chaque récepteur radio du système 200 et le dispositif sous-marin, les différences d'horloges, en secondes, entre chaque récepteur radio du système 200 et les sources, 165, 170 et ou 175, satellitaires.
- la construction progressive du vecteur de mesures. Chaque mesure est une variable aléatoire issue d'un processus de mesure. On peut citer les mesures de pseudo-distances acoustiques et radio, mais aussi les mesures de profondeur, d'accélération ou de magnétisme ambiant par exemple.
- la construction progressive du vecteur de résidu de mesures. Chaque résidu de mesure est une fonction d'une mesure du vecteur de mesure avec le vecteur d'état. Le résidu est caractérisé dans le fait que sa valeur numérique (mono ou multidimensionnelle de dimension identique ou différente de la mesure concernée) vaut zéro dans le cas d'une mesure considérée comme sans erreur, et dont la valeur grandis lorsque cette erreur considérée grandis.
- enfin un processus régulier de mise à jour du vecteur d'état. Ce processus ayant pour objectif de réévaluer ledit vecteur d'état en explorant de nouvelles valeurs, puis, par conséquence, de réévaluer le vecteur de résidu de mesures dans l'objectif de réduire au maximum une certaine norme du vecteur de résidu de mesures. Pour ce faire il existe plusieurs méthodes dites probabilistes. Elles sont dites probabilistes dans le sens où la théorie des probabilités permet de donner une direction et une valeur de la mise à jour itérative du vecteur d'état. On peut citer les méthodes basées sur les pseudo-inverses, basées sur la décomposition dite « QR », la décomposition de Cholesky, ou encore les méthodes d'explorations semi-aléatoires dites de Monte-Carlo, ou les méthodes basées sur les théories évolutives issues du domaine de la génétique.
- de manière optionnelle, on peut ajouter un processus d'élimination des valeurs d'état et de mesures dont on considère les effets comme non-désirables sur le processus global.

Le processus d'estimation probabiliste permet donc d'obtenir en temps-réel la trajectoire ou une partie de la trajectoire du moyen 155 de calcul de la position du dispositif en plus d'autres variables considérées comme secondaires.

Dans des modes de réalisation, chaque émetteur 140 d'un transpondeur, 125, 130 ou 135, de surface émet par voie acoustique une combinaison linéaire de plusieurs signaux périodiques sur plusieurs canaux a raison d'un canal pour une pseudo-distance à émettre, chaque canal étant soit un signal d'horloge dans le temps du système 200 de géolocalisation, soit la représentation de l'une des pseudo-distances radio dont l'information est à émettre, chaque signal périodique étant temporellement décalé en fonction de la valeur de la pseudo-distance radio à émettre.

Ainsi, par exemple, si l'émetteur 140 doit émettre un signal représentatif d'une pseudo-distance estimée, cet émetteur 140 émet des signaux acoustiques selon deux fréquences : une première fréquence correspond au signal d'horloge du système de géolocalisation 200 et une deuxième fréquence correspondant à la pseudo-distance à émettre.

Sur cette deuxième fréquence, un signal périodique est émis, en continu ou pendant un intervalle de temps déterminé, et décalé temporellement en fonction de la valeur de la pseudo-distance estimée. La fonction de décalage est par exemple linéaire, à raison d'une seconde pour une unité de distance déterminée. Par exemple, une distance de cent kilomètres correspond à un décalage d'une milliseconde. Ainsi, si une pseudo-distance estimée est égale à vingt-mille kilomètres, le signal périodique est décalé de deux-cent millisecondes.

Si, par exemple, l'émetteur 140 doit émettre deux signaux représentatifs chacun d'une pseudo-distance estimée, trois fréquences sont mises en œuvre : la première correspond au signal d'horloge, la deuxième correspond à une première pseudo-distance et la troisième correspond à une deuxième pseudo-distance.

Ainsi, comme on le comprend, dans ces modes de réalisation, la valeur des pseudo-distances n'est binarisée puis émise par l'émetteur 140 mais émise indirectement par décalage du signal périodique. Ces modes de réalisation rendent plus robuste la transmission des valeurs de pseudo-distances.

De plus, la mise en œuvre d'une pluralité de fréquences permet une émission simultanée, et indirecte, de la valeur de chaque pseudo-distance.

Dans ces modes de réalisation, le récepteur 145 acoustique reconstitue les informations représentatives des pseudo-distances radio, par comparaison des temps d'arrivée des différents signaux acoustiques sur les différents canaux acoustiques.

Dans des modes de réalisation, au moins un transpondeur 130 de surface comporte au moins deux émetteurs 140 acoustiques sous-marins.

Dans des modes de réalisation, le système 100 objet de la présente invention comporte une structure 132 de fixation des au moins deux dits émetteurs 140 acoustiques sous-marins, le transpondeur 130 de surface comportant un moyen 133 de détermination de la position de ces émetteurs acoustiques sous-marins dans le référentiel terrestre relativement au récepteur des signaux émis par les sources, 165, 170 et 175, satellitaires, et un moyen de calcul 134 mettant en œuvre les opérations suivantes :
- une mesure de valeurs de pseudo-distances radio théoriques simulant un positionnement identique du récepteur 160 radio et des émetteurs 140 acoustiques sous-marins et
- une émission de commande d'envoi des mesures théoriques de valeurs de pseudo-distances radio, par chaque émetteur 140.

Ce moyen de calcul 134 est, par exemple, un circuit électronique de calcul.

Le moyen de calcul 134 récupère les mesures de pseudo-distances radio issues du récepteur 160 radio et les directions respectives des sources, 165, 170 et/ou 175 du système 200 de géolocalisation dans un référentiel local (par exemple Est/Nord/Haut). On considère que le moyen de calcul est en mesure de connaitre la position des émetteurs 140 acoustiques sous-marins par rapport au récepteur 160 radio dans ledit référentiel local.

Alors il est possible de simuler ce qu'aurait été la mesure de pseudo-distance radio si le récepteur 160 avait été placé à la position de chaque émetteur 140. En effet, on sait que la mesure de pseudo-distance radio est par définition la somme d'une part du déphasage d'horloge multipliée par la vitesse de la lumière, et d'autre part de la distance séparant la source, 165, 170 et/ou 175 du système 200 de géolocalisation et le récepteur 160 radio. On considère également le déphasage d'horloge constant lors de la simulation de déplacement du récepteur 160. Ainsi, pour obtenir la nouvelle mesure de pseudo-distance radio, comme si le récepteur radio avait été placé à la position d'un émetteur 140 acoustique, il faudra ajouter à la mesure de pseudo-distance, en mètre, de la distance de projection orthogonale du vecteur de position de l'émetteur 140 acoustique, projeté sur le vecteur unitaire passant par le récepteur 160 radio et la source 165, 170 et/ou 175 du système 200 de géolocalisation, en mètre. Ceci est notre nouvelle mesure virtuelle de pseudo-distance respectant le modèle de mesure de pseudo-distance radio.

Dans des modes de réalisation, au moins un transpondeur de surface 125 comporte un moyen 186 de détermination d'une position par rapport au système 200 de géolocalisation, l'émetteur 140 transmettant une information représentative de la position déterminée vers le dispositif, 105, 110, 115 et/ou 120 sous-marin, le moyen 155 de calcul du dispositif sous-marin étant configuré pour calculer une position par rapport au référentiel du système 200 de géolocalisation.

Le moyen de détermination 186 est, par exemple, un circuit électronique de calcul configuré pour estimer, de manière probabiliste, le positionnement du transpondeur 125 à partir, au minimum, d'une sélection des informations représentative des pseudo-distances radio estimées par le moyen d'estimation 180.

Ce moyen de détermination 186 est configuré pour, par exemple, réaliser une trilatération du transpondeur 125 à partir des pseudo-distances estimées par le moyen d'estimation 180.

Dans des modes de réalisation, le système 100 comporte au moins deux dispositifs, 105, 110, 115 et/ou 120, sous-marins.

Dans des modes de réalisation, au moins un transpondeur de surface, 125, 130 et/ou 135, comporte un moyen 140 de communication configuré pour recevoir, depuis au moins un dispositif 105 sous-marin dit « principal », la position d'un ou plusieurs dispositifs sous-marin et de retransmettre ces informations représentatives de la position d'un ou plusieurs dispositifs sous-marins vers au moins un deuxième dispositif sous-marin, les dispositifs sous-marin dit « principaux » étant configurés pour transmettre une information représentative de la position d'au moins un dispositif sous-marin vers au moins un transpondeur, 125, 130 et/ou 135, de surface.

Dans des modes de réalisation, au moins un dispositif, 105, 110, 115 et/ou 120, sous-marin comporte un moyen 191 de communication d'une information représentative de la position calculée vers au moins un deuxième dispositif sous-marin dit « principal ».

Le moyen de communication 191 est, par exemple, une antenne configurée pour émettre des signaux électromagnétiques ou un transducteur électroacoustique configuré pour émettre des signaux acoustiques représentatifs de signaux électriques représentatifs de la position calculée.

Dans des modes de réalisation, au moins un dispositif 105 sous-marin comporte un moyen 195 d'affichage d'une information de positionnement d'au moins un dispositif 110 sous-marin.

Ce moyen d'affichage 195 est, par exemple, un écran.

Dans des modes de réalisation, le système 100 objet de la présente invention comporte un moyen d'affichage 210, positionné au-dessus de la surface, d'une information représentative de la position d'un ou plusieurs dispositifs sous-marins, 105, 110, 115 et/ou 120.

Ce moyen d'affichage 210 est, par exemple, un écran d'un ordinateur, d'une tablette numérique ou d'un ordiphone par exemple.

Dans des modes de réalisation, au moins un dispositif 110 sous-marin comporte au moins un capteur 190 supplémentaire parmi :
- un capteur de profondeur,
- une centrale inertielle et
- un magnétomètre,
le moyen 155 de calcul de la position du dispositif comportant une unité de calcul exécutant un processus d'estimation probabiliste réalisant cette estimation à l'aide au minimum des mesures suivantes :
- une sélection des informations représentative des pseudo-distances radio reçues par le moyen de réception,
- une sélection de pseudo-distances acoustiques déterminées par le moyen de détermination et
- une sélection de mesures issues d'au moins un dit capteur supplémentaire.

Dans des modes de réalisation, au moins un dispositif 110 est embarqué dans un bracelet.

Dans des variantes, au moins un dispositif sous-marin est embarqué dans un drone ou dans un dispositif sous-marin.

Préférentiellement, le système 100 objet de la présente invention comporte :
- au moins trois transpondeurs, 125, 130 et 135, et un capteur 190 ou
- au moins quatre transpondeurs, 125, 130 et 135.

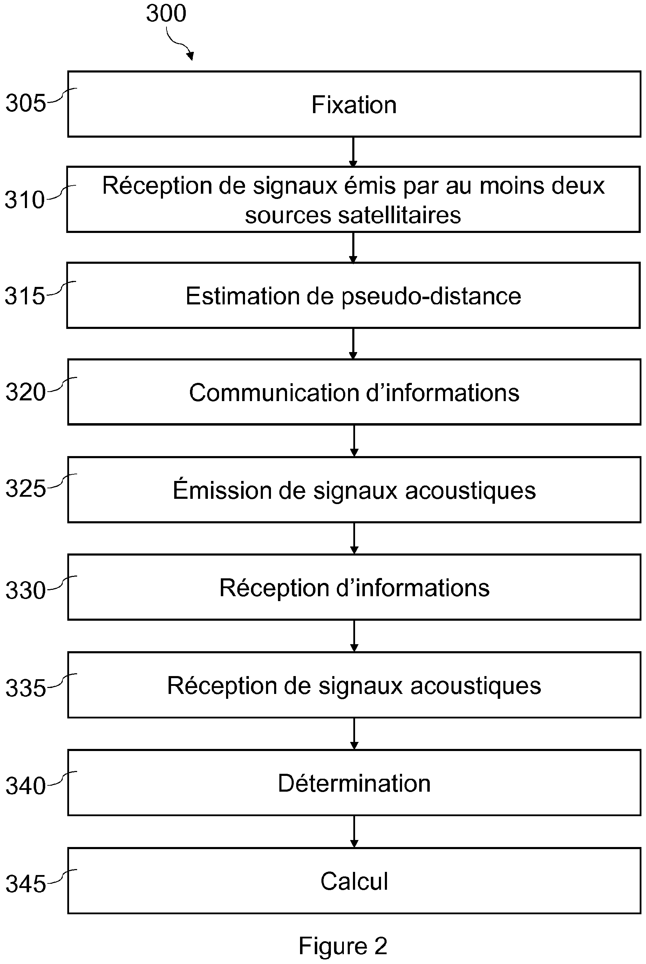

On observe, sur la figure 2, un mode de réalisation particulier du procédé 300 objet de la présente invention. Ce procédé 300 de positionnement d'un dispositif sous-marin comporte :
- une étape 305 de fixation d'un transpondeur à un flotteur configuré pour présenter une flottabilité nulle à une profondeur dédié,
- une étape 310 de réception, par au moins deux transpondeurs de surface, de signaux radio émis par au moins deux sources satellitaires de signaux d'un système de géolocalisation,
- une étape 315 d'estimation d'au moins une pseudo-distance radio entre le transpondeur de surface et au moins deux sources de signaux du système de géolocalisation,
- une étape 320 de communication, par un transpondeur, d'informations représentatives des pseudo-distances radio vers le dispositif sous-marin,
- une étape 325 d'émission acoustique sous-marine, par un transpondeur, synchronisée sur le temps du système de géolocalisation configuré pour transmettre un signal acoustique vers le dispositif sous-marin,
- une étape 330 de réception d'informations, par un moyen de réception du dispositif sous-marin, représentatives des pseudo-distances radio émises par au moins deux transpondeurs de surface,
- une étape 335 de réception de signaux acoustiques, par un récepteur du dispositif sous-marin, des signaux acoustiques émis par au moins deux transpondeur de surface,
- une étape 340 de détermination d'une ou plusieurs pseudo-distances acoustiques entre au moins deux émetteurs acoustiques sous-marin de transpondeurs de surface et le dispositif sous-marin et
- une étape 345 de calcul de la position du dispositif dans un référentiel terrestre centré sur l'un des transpondeurs de surface, le moyen de calcul de la position comportant une unité de calcul exécutant un processus d'estimation probabiliste réalisant cette estimation à l'aide au minimum des mesures suivantes :
   - une sélection des informations représentative des pseudo-distances radio reçues par le moyen de réception,
   - une sélection de pseudo-distances acoustiques déterminées par le moyen de détermination.

Ce procédé 300 est réalisé, par exemple, par la mise en œuvre du système 100 tel que décrit en regard de la figure 1.

## Revendications

1. Système (100) de positionnement d'un dispositif (105, 110, 115, 120) sous-marin comportant :
- au moins deux transpondeurs (125, 130, 135) de surface, chaque transpondeur de surface comportant un récepteur (160) de signaux radio émis par au moins deux sources (165, 170, 175) satellitaires de signaux d'un système (200) de géolocalisation,
- chaque transpondeur de surface comportant :
- un moyen (180) d'estimation d'au moins une pseudo-distance radio entre le transpondeur de surface et au moins deux sources de signaux du système de géolocalisation,
- une fixation (185) à un flotteur configuré pour présenter une flottabilité nulle à une profondeur dédiée et
- un moyen (140) de communication d'informations représentatives des pseudo-distances radio vers le dispositif sous-marin, et
- un émetteur (140) acoustique sous-marin synchronisé sur le temps du système de géolocalisation configuré pour transmettre un signal acoustique vers le dispositif sous-marin,
- le dispositif sous-marin comportant :
- un moyen (145) de réception d'informations représentatives des pseudo-distances radio émises par au moins deux transpondeurs de surface,
- un récepteur (145) de signaux acoustiques configuré pour recevoir les signaux acoustiques émis par au moins deux transpondeur de surface,
- un moyen (150) de détermination d'une ou plusieurs pseudo-distances acoustiques entre au moins deux émetteurs acoustiques sous-marin et le dispositif sous-marin et
- un moyen (155) de calcul de la position du dispositif dans un référentiel terrestre centré sur l'un des transpondeurs de surface, le moyen de calcul de la position comportant une unité de calcul exécutant un processus d'estimation probabiliste réalisant cette estimation à l'aide au minimum des mesures suivantes :
- une sélection des informations représentative des pseudo-distances radio entre le transpondeur de surface et au moins deux sources de signaux du système de géolocalisation, reçues par le moyen de réception,
- une sélection de pseudo-distances acoustiques déterminées par le moyen de détermination.

2. Système (100) selon la revendication 1, dans lequel au moins un émetteur (140) acoustique sous-marin est synchronisé sur une horloge interne du récepteur radio du système (200) de géolocalisation.

3. Système (100) selon l'une des revendications 1 ou 2, dans lequel l'émetteur (140) acoustique et le moyen (140) de communication sont confondus, l'émetteur acoustique communicant des informations représentatives des pseudo-distances radio vers le dispositif sous-marin.

4. Système (100) selon la revendication 3, dans lequel le récepteur (145) et le moyen (145) de réception d'un dispositif sous-marin sont confondus, le récepteur recevant des informations représentatives des pseudo-distances radio émises par au moins deux transpondeurs de surface.

5. Système (100) selon l'une des revendications 1 à 4, dans lequel :
- chaque émetteur (140) d'un transpondeur (125, 130, 135) de surface émet par voie acoustique une combinaison linéaire de plusieurs signaux périodiques sur plusieurs canaux a raison d'un canal pour une pseudo-distance à émettre, chaque canal étant soit un signal d'horloge dans le temps du système (200) de géolocalisation, soit la représentation de l'une des pseudo-distances radio dont l'information est à émettre, chaque signal périodique étant temporellement décalé en fonction de la valeur de la pseudo-distance radio à émettre et
- le récepteur (145) acoustique reconstitue les informations représentatives des pseudo-distances radio, par comparaison des temps d'arrivée des différents signaux acoustiques sur les différents canaux acoustiques.

6. Système (100) selon l'une des revendications 1 à 5, dans lequel au moins un transpondeur (125, 130, 135) de surface comporte au moins deux émetteurs (140) acoustiques sous-marins.

7. Système (100) selon la revendication 6, qui comporte une structure (132) de fixation des au moins deux dits émetteurs (140) acoustiques sous-marins, le transpondeur (130) de surface comportant un moyen (133) de détermination de la position de ces émetteurs acoustiques sous-marins dans le référentiel terrestre relativement au récepteur des signaux émis par les sources (165; 170, 175) satellitaires, et un moyen de calcul mettant en œuvre les opérations suivantes :
- une mesure de valeurs de pseudo-distances radio théoriques simulant un positionnement identique du récepteur radio et des émetteurs acoustiques sous-marins et
- une émission de commande d'envoi des mesures théoriques de valeurs de pseudo-distances radio, par chaque émetteur.

8. Système (100) selon l'une des revendications 1 à 7, dans lequel au moins un transpondeur de surface (125) comporte un moyen (186) de détermination d'une position par rapport au système (200) de géolocalisation, l'émetteur (140) transmettant une information représentative de la position déterminée vers le dispositif (105, 110, 115, 120) sous-marin, le moyen (155) de calcul du dispositif sous-marin étant configuré pour calculer une position par rapport au référentiel du système de géolocalisation.

9. Système (100) selon la revendication 1 à 8, qui comporte au moins deux dispositifs (105, 115) sous-marins, dans lequel au moins un transpondeur (125, 130, 135) de surface comporte un moyen (140) de communication configuré pour recevoir, depuis au moins un dispositif sous-marin dit « principal », la position d'un ou plusieurs dispositifs sous-marin, et de retransmettre ces informations représentatives de la position d'un ou plusieurs dispositifs sous-marins vers au moins un deuxième dispositif sous-marin, les dispositifs sous-marin dit « principaux » étant configurés pour transmettre une information représentative de la position d'au moins un dispositif sous-marin vers au moins un transpondeur de surface.

10. Système (100) selon la revendication 9, dans lequel au moins un dispositif (105, 110, 115, 120) sous-marin comporte un moyen de communication d'une information représentative de la position calculée vers au moins un deuxième dispositif sous-marin dit « principal ».

11. Système (100) selon les revendications 1 à 10, dans lequel au moins un dispositif (105) sous-marin comporte un moyen (195) d'affichage d'une information de positionnement d'au moins un dispositif (110) sous-marin.

12. Système (100) selon l'une des revendications 1 à 11, qui comporte un moyen d'affichage (210), positionné au-dessus de la surface, d'une information représentative de la position d'un ou plusieurs dispositifs sous-marins.

13. Système (100) selon l'une des revendications 1 à 12, dans lequel au moins un dispositif (110) sous-marin comporte au moins un capteur (190) supplémentaire parmi :
- un capteur de profondeur,
- une centrale inertielle et
- un magnétomètre,
le moyen (155) de calcul de la position du dispositif comportant une unité de calcul exécutant un processus d'estimation probabiliste réalisant cette estimation à l'aide au minimum des mesures suivantes :
- une sélection des informations représentative des pseudo-distances radio reçues par le moyen de réception,
- une sélection de pseudo-distances acoustiques déterminées par le moyen de détermination et
- une sélection de mesures issues d'au moins un dit capteur supplémentaire.

14. Système (100) selon l'une des revendications 1 à 13, dans lequel au moins un dispositif (110) est embarqué dans un bracelet.

15. Procédé (300) de positionnement d'un dispositif sous-marin comportant :
- une étape (305) de fixation d'un transpondeur à un flotteur configuré pour présenter une flottabilité nulle à une profondeur dédié,
- une étape (310) de réception, par au moins deux transpondeurs de surface, de signaux radio émis par au moins deux sources satellitaires de signaux d'un système de géolocalisation,
- une étape (315) d'estimation d'au moins une pseudo-distance radio entre le transpondeur de surface et au moins deux sources de signaux du système de géolocalisation,
- une étape (320) de communication, par un transpondeur, d'informations représentatives des pseudo-distances radio vers le dispositif sous-marin,
- une étape (325) d'émission acoustique sous-marine, par un transpondeur, synchronisée sur le temps du système de géolocalisation configuré pour transmettre un signal acoustique vers le dispositif sous-marin,
- une étape (330) de réception d'informations, par un moyen de réception du dispositif sous-marin, représentatives des pseudo-distances radio émises par au moins deux transpondeurs de surface,
- une étape (335) de réception de signaux acoustiques, par un récepteur du dispositif sous-marin, des signaux acoustiques émis par au moins deux transpondeur de surface,
- une étape (340) de détermination d'une ou plusieurs pseudo-distances acoustiques entre au moins deux émetteurs acoustiques sous-marin de transpondeurs de surface et le dispositif sous-marin et
- une étape (345) de calcul de la position du dispositif dans un référentiel terrestre centré sur l'un des transpondeurs de surface, le moyen de calcul de la position comportant une unité de calcul exécutant un processus d'estimation probabiliste réalisant cette estimation à l'aide au minimum des mesures suivantes :
- une sélection des informations représentative des pseudo-distances radio entre le transpondeur de surface et au moins deux sources de signaux du système de géolocalisation, reçues par le moyen de réception,
- une sélection de pseudo-distances acoustiques déterminées par le moyen de détermination.

## Patentansprüche

1. Positionierungssystem (100) einer Unterwasser-Vorrichtung (105, 110, 115, 120), umfassend:
- wenigstens zwei Oberflächentransponder (125, 130, 135), wobei jeder Oberflächentransponder einen Empfänger (160) von Funksignalen umfasst, die von wenigstens zwei Satellitenquellen (165, 170, 175) von Signalen eines Geolokalisierungssystems (200) gesendet werden,
- wobei jeder Oberflächentransponder umfasst:
- ein Einschätzungsmittel (180) wenigstens eines Pseudo-Entfernungsfunks zwischen dem Oberflächentransponder und wenigstens zwei Signalquellen des Geolokalisierungssystems,
- eine Befestigung (185) an einem Schwimmer, der ausgestaltet ist, um eine Schwimmbarkeit Null in einer dedizierten Tiefe aufzuweisen und
- ein Kommunikationsmittel (140) von Informationen, die Pseudo-Entfernungsfunk zur Unterwasser-Vorrichtung darstellt, und
- einen synchronisierten akustischen Unterwasser-Sender (140) über die Zeit des Geolokalisierungssystems, das zum Übertragen eines akustischen Signals auf die Unterwasser-Vorrichtung ausgestaltet ist,
- wobei die Unterwasser-Vorrichtung umfasst:
- ein Empfangsmittel (145) für Informationen, die Pseudo-Entfernungsfunk darstellen und von wenigstens zwei Oberflächentranspondern ausgegeben sind,
- einen Empfänger (145) von akustischen Signalen, der zum Empfangen der akustischen Signale ausgestaltet ist, die von wenigstens zwei Oberflächentranspondern gesendet sind,
- ein Bestimmungsmittel (150) einer oder mehrerer akustischen Pseudo-Entfernung(en) zwischen wenigstens zwei akustischen Unterwasser-Sendern und der Unterwasser-Vorrichtung und
- ein Berechnungsmittel (155) der Position der Vorrichtung in einem terrestrischen Bezugssystem, das auf einen der Oberflächentransponder zentriert ist, wobei das Berechnungsmittel der Position eine Berechnungseinheit umfasst, die einen probabilistischen Einschätzungsprozess ausführt, der diese Schätzung mithilfe wenigstens der folgenden Maßnahmen realisiert:
- eine Auswahl der Informationen, die Funk-Pseudoentfernungen zwischen dem Oberflächentransponder und wenigstens zwei Signalquellen des Geolokalisierungssystems darstellt, die von dem Empfangsmittel empfangen sind,
- eine Auswahl von akustischen Pseudo-Entfernungen, die von dem Bestimmungsmittel bestimmt sind.

2. System (100) gemäß Anspruch 1, bei dem wenigstens ein akustischer Unterwasser-Sender (140) auf eine interne Zeituhr des Funkempfängers des Geolokalisierungssystems (200) synchronisiert ist.

3. System (100) gemäß einem der Ansprüche 1 oder 2, bei dem der akustische Sender (140) und das Kommunikationsmittel (140) zusammenfallen, wobei der akustische Sender Informationen übermittelt, die Funk-Pseudoentfernungen zur Unterwasser-Vorrichtung darstellen.

4. System (100) gemäß Anspruch 3, bei dem der Empfänger (145) und das Empfangsmittel (145) einer Unterwasser-Vorrichtung zusammenfallen, wobei der Empfänger Informationen empfängt, die Funk-Pseudoentfernungen darstellen, die von wenigstens zwei Oberflächentranspondern ausgegeben sind.

5. System (100) gemäß einem der Ansprüche 1 bis 4, bei dem:
- jeder Sender (140) eines Oberflächentransponders (125, 130, 135) auf akustischem Weg eine lineare Kombination von mehreren periodischen Signalen auf mehreren Kanälen im Umfang von einem Kanal für eine zu sendende Pseudo-Entfernung sendet, wobei jeder Kanal entweder ein Zeituhrsignal in der Zeit des Geolokalisierungssystems (200) oder die Darstellung einer der Funk-Pseudoentfernungen ist, deren Information zu senden ist, wobei jedes periodische Signal in Abhängigkeit von dem Wert der zu sendenden Funk-Pseudoentfernung versetzt ist, und
- der akustische Empfänger (145) die Informationen per Vergleich der Ankunftszeiten der unterschiedlichen akustischen Signale auf den unterschiedlichen akustischen Kanälen wiederherstellt, die Funk-Pseudoentfernungen darstellen.

6. System (100) gemäß einem der Ansprüche 1 bis 5, bei dem wenigstens ein Oberflächentransponder (125, 130, 135) wenigstens zwei akustische Unterwasser-Sender (140) umfasst.

7. System (100) gemäß Anspruch 6, das eine Befestigungsstruktur (132) der genannten wenigstens zwei akustischen Unterwasser-Sendern (140) umfasst, wobei der Oberflächentransponder (130) ein Bestimmungsmittel (133) der Position dieser akustischen Unterwassersender in dem terrestrischen Bezugssystem in Bezug zu dem Empfänger der Signale, die von den Satellitenquellen (165; 170, 175) ausgegeben sind, und ein Berechnungsmittel, das die folgenden Operationen umsetzt, umfasst:
- eine Messung von theoretischen Funk-Pseudoentfernungswerten, die eine identische Positionierung des Funkempfängers und der akustischen Unterwassersender simulieren, und
- eine Ausgabe eines Sendebefehls der theoretischen Messungen von Werten von Funk-Pseudoentfernungen durch jeden Sender.

8. System (100) gemäß einem der Ansprüche 1 bis 7, bei dem wenigstens ein Oberflächentransponder (125) ein Bestimmungsmittel (186) einer Position in Bezug auf das Geolokalisierungssystem (200) umfasst, wobei der Sender (140) eine Information überträgt, die die bestimmte Position zur Unterwasser-Vorrichtung (105, 110, 115, 120) darstellt, wobei das Berechnungsmittel (155) der Unterwasservorrichtung zum Berechnen einer Position in Bezug auf das Bezugssystem des Geolokalisierungssystems ausgestaltet ist.

9. System (100) gemäß Anspruch 1 bis 8, das wenigstens zwei Unterwasser-Vorrichtungen (105, 115) umfasst, bei dem wenigstens ein Oberflächentransponder (125, 130, 135) ein Kommunikationsmittel (140) umfasst, das zum Empfangen der Position einer oder mehrerer Unterwasser-Vorrichtungen von wenigstens einer als "Haupt"-Vorrichtung bezeichneten Unterwasser-Vorrichtung und zum Rückübertragen dieser Informationen, die die Position einer oder mehrerer Unterwasser-Vorrichtung(en) auf wenigstens eine zweite Unterwasser-Vorrichtung darstellt, ausgestaltet ist, wobei die als "Haupt"-Vorrichtung bezeichneten Unterwasser-Vorrichtungen zum Übertragen einer Information ausgestaltet sind, die die Position wenigstens einer Unterwasser-Vorrichtung auf wenigstens einen Oberflächentransponder darstellt.

10. System (100) gemäß Anspruch 9, bei dem wenigstens eine Unterwasser-Vorrichtung (105, 110, 115, 120) ein Kommunikationsmittel einer Information umfasst, die die Position darstellt, die zu wenigstens einer zweiten Unterwasser-Vorrichtung, bezeichnet als "Haupt-Vorrichtung", berechnet ist

11. System (100) gemäß den Ansprüchen 1 bis 10, bei dem wenigstens eine Unterwasser-Vorrichtung (105) ein Anzeigemittel (195) einer Positionierungsinformation wenigstens einer Unterwasser-Vorrichtung (110) umfasst.

12. System (100) gemäß einem der Ansprüche 1 bis 11, das ein oberhalb der Oberfläche angeordnetes Anzeigemittel (210) einer Information, die die Position einer oder mehrerer Unterwasser-Vorrichtung(en) darstellt, umfasst.

13. System (100) gemäß einem der Ansprüche 1 bis 12, bei dem wenigstens eine Unterwasser-Vorrichtung (110) wenigstens einen zusätzlichen Sensor (190) umfasst, darunter:
- ein Tiefensensor,
- eine Trägheitszentrale und
- ein Magnetometer,
das Berechnungsmittel (155) der Position der Vorrichtung, umfassend eine Berechnungseinheit, die einen probabilistischen Einschätzungsprozess ausführt, der diese Schätzung mithilfe wenigstens der folgenden Maßnahmen realisiert:
- eine Auswahl der Informationen, die Funk-Pseudoentfernungen darstellt, die vom Empfangsmittel empfangen sind,
- eine Auswahl von akustischen Pseudo-Entfernungen, die von dem Bestimmungsmittel bestimmt sind, und
- eine Auswahl von Messungen, die aus wenigstens einem als zusätzlicher Sensor bezeichneten Sensor stammen.

14. System (100) gemäß einem der Ansprüche 1 bis 13, bei dem wenigstens eine Vorrichtung (110) in einem Armband integriert ist.

15. Positionierungsverfahren (300) einer Unterwasser-Vorrichtung, umfassend:
- einen Befestigungsschritt (305) eines Transponders an einem Schwimmer, der ausgestaltet ist, um eine Schwimmbarkeit Null in einer dedizierten Tiefe aufzuweisen,
- einen Empfangsschritt (310) durch wenigstens zwei Oberflächentransponder von durch wenigstens zwei Satellitenquellen von Signalen eines Geolokalisierungssystems ausgegebenen Funksignalen,
- einen Einschätzungsschritt (315) wenigstens einer Funk-Pseudoentfernung zwischen dem Oberflächentransponder und wenigstens zwei Signalquellen des Geolokalisierungssystems,
- einen Kommunikationsschritt (320) von Informationen, die Funk-Pseudoentfernungen zur Unterwasser-Vorrichtung darstellen, durch einen Transponder
- einen Schritt (325) zum akustischen Unterwasser-Senden, der über die Zeit des Geolokalisierungssystems synchronisiert ist, durch einen Transponder, und das zum Übertragen eines akustischen Signals zur Unterwasser-Vorrichtung ausgestaltet ist.
- einen Empfangsschritt (330) für Informationen, die Funk-Pseudoentfernungen darstellen und von wenigstens zwei Oberflächentranspondern ausgegeben sind, durch ein Empfangsmittel der Unterwasser-Vorrichtung,
- einen Empfangsschritt (335) von akustischen Signalen, die von wenigstens zwei Oberflächentranspondern ausgegeben sind, durch einen Empfänger der Unterwasser-Vorrichtung,
- einen Bestimmungsschritt (340) einer oder mehrerer akustischer Pseudo-Entfernung(en) zwischen wenigstens zwei akustischen Unterwasser-Sendern und der Unterwasser-Vorrichtung und
- einen Berechnungsschritt (345) der Position der Vorrichtung in einem terrestrischen Bezugssystem, das auf einen der Oberflächentransponder zentriert ist, wobei das Berechnungsmittel der Position eine Berechnungseinheit umfasst, die einen probabilistischen Einschätzungsprozess ausführt, der diese Schätzung mithilfe wenigstens der folgenden Maßnahmen realisiert:
- eine Auswahl der Informationen, die Funk-Pseudoentfernungen zwischen dem Oberflächentransponder und wenigstens zwei Signalquellen des Geolokalisierungssystems darstellt, die von dem Empfangsmittel empfangen sind,
- eine Auswahl von akustischen Pseudo-Entfernungen, die von dem Bestimmungsmittel bestimmt sind.

## Claims

1. System (100) for positioning an underwater device (105, 110, 115, 120), comprising:
- at least two surface transponders (125, 130, 135), each surface transponder comprising a receiver (160) of radio signals transmitted by at least two satellite sources (165, 170, 175) of signals of a geolocation system (200),
- each surface transponder comprising:
- a means (180) for estimating at least one radio pseudo-distance between the surface transponder and at least two sources of signals from the geolocation system,
- an attachment (185) to a float configured to have neutral buoyancy at a specific depth, and
- a means (140) for communicating information representative of the radio pseudo-distances to the underwater device, and
- an underwater acoustic transmitter (140) synchronized to the time of the geolocation system configured to transmit an acoustic signal to the underwater device,
- the underwater device comprising:
- a means (145) for receiving information representative of the radio pseudo-distances transmitted by at least two surface transponders,
- an acoustic signal receiver (145) configured to receive the acoustic signals transmitted by at least two surface transponders,
- a means (150) for determining one or more acoustic pseudo-distances between at least two underwater acoustic transmitters and the underwater device, and
- a means (155) for calculating the position of the device in a terrestrial frame of reference centered on one of the surface transponders, the means for calculating the position comprising a computing unit executing a probabilistic estimation process performing this estimation by means of at least the following measurements:
- a selection of information representative of the radio pseudo-distances between the surface transponder and at least two sources of signals of a geolocation, received by the reception means,
- a selection of acoustic pseudo-distances determined by the determination means.

2. System (100) according to claim 1, wherein at least one underwater acoustic transmitter (140) is synchronized to an internal clock of the radio receiver of the geolocation system (200).

3. System (100) according to one of claims 1 or 2, wherein the acoustic transmitter (140) and the communication means (140) are one and the same, the acoustic transmitter communicating information representative of the radio pseudo-distances to the underwater device.

4. System (100) according to claim 3, wherein the receiver (145) and the receiving means (145) of an underwater device are one and the same, the receiver receiving information representative of the radio pseudo-distances transmitted by at least two surface transponders.

5. System (100) according to one of claims 1 to 4, wherein:
- each transmitter (140) of a surface transponder (125, 130, 135) acoustically transmits a linear combination of several periodic signals over several channels, with one channel for one pseudo-distance to be transmitted, each channel being either a clock signal over time from the geolocation system (200) or the representation of one of the radio pseudo-distances whose information is to be transmitted, each periodic signal being time-shifted as a function of the value of the radio pseudo-distance radio to be transmitted, and
- the acoustic receiver (145) reconstitutes the information representative of the radio pseudo-distances, by comparing the arrival times of the different acoustic signals over the different acoustic channels.

6. System (100) according to one of claims 1 to 5, wherein at least one surface transponder (125, 130, 135) comprises at least two underwater acoustic transmitters (140).

7. System (100) according to claim 6, which comprises a structure (132) for attaching the at least two said underwater acoustic transmitters (140), the surface transponder (130) comprising a means (133) for determining the position of these underwater acoustic transmitters in the terrestrial frame relative to the receiver of signals transmitted by the satellite sources (165, 170, 175), and a calculation means implementing the following operations:
- a measurement of theoretical radio pseudo-distances simulating an identical position of the radio receiver and underwater acoustic transmitters, and
- a transmission for commanding the transmission of the theoretical measurements of radio pseudo-distance values, by each transmitter.

8. System (100) according to one of claims 1 to 7, wherein at least one surface transponder (125) comprises a means (186) for determining a position relative to the geolocation system (200), the transmitter (140) transmitting an item of information representative of the determined position to the underwater device, (105, 110, 115, 120), the calculation means (155) of the underwater device being configured to calculate a position relative to the frame of reference of the geolocation system.

9. System (100) according to claim 1 to 8, which comprises at least two underwater devices (105, 115), wherein at least one surface transponder (125, 130, 135) comprises a communication means (140) configured to receive, from at least one underwater device, known as "principal", the position of one or more underwater devices, and to retransmit this information representative of the position of one or more underwater devices to at least one second underwater device, the so-called "principal" underwater devices being configured to transmit an item of information representative of the position of at least one underwater device to at least one surface transponder.

10. System (100) according to claim 9, wherein at least one underwater device (105, 110, 115, 120) comprises a means for communicating an item of information representative of the calculated position to at least a second so-called "principal" underwater device.

11. System (100) according to claims 1 to 10, wherein at least one underwater device (105) comprises a means (195) for displaying an item of position information of at least one underwater device (110).

12. System (100) according to one of claims 1 to 11, which comprises a means (210), positioned above the surface, for displaying an item of information relative of the position of one or more underwater devices.

13. System (100) according to one of claims 1 to 12, wherein at least one underwater device (110) comprises at least one additional sensor (190) amongst:
- a depth sensor;
- an inertial measurement unit; and
- a magnetometer,
the means (155) for calculating the position of the device comprising a computing unit executing a probabilistic estimation process performing this estimation by means of at least the following measurements:
- a selection of information representative of the radio pseudo-distances received by the reception means,
- a selection of acoustic pseudo-distances determined by the determination means, and
- a selection of measurements from at least one said additional sensor.

14. System (100) according to one of claims 1 to 13, wherein at least one device (110) is embedded in a bracelet.

15. Method (300) of positioning an underwater device, comprising:
- a step (305) of attaching a transponder to a float configured to have neutral buoyancy at a specific depth,
- a step (310) of receiving, by at least two surface transponders, radio signals transmitted by at least two satellite sources of signals of a geolocation system,
- a step (315) of estimating at least one radio pseudo-distance between the surface transponder and at least two sources of signals from the geolocation system,
- a step (320) of communicating, by a transponder, information representative of the radio pseudo-distances to the underwater device,
- a step (325) of underwater acoustic transmission, by a transponder, synchronized to the time of the geolocation system configured to transmit an acoustic signal to the underwater device,
- a step (330) of receiving information, by a reception means of the underwater device, representative of the radio pseudo-distances transmitted by at least two surface transponders,
- a step (335) of receiving, by a receiver of the underwater device, acoustic signals representative of the radio pseudo-distances transmitted by at least two surface transponders,
- a step (340) of determining one or more acoustic pseudo-distances between at least two underwater acoustic transmitters of surface transponders and the underwater device, and
- a step (345) of calculating the position of the device in a terrestrial frame of reference centered on one of the surface transponders, the means for calculating the position comprising a computing unit executing a probabilistic estimation process performing this estimation by means of at least the following measurements:
- a selection of information representative of the radio pseudo-distances between the surface transponder and at least two sources of signals of a geolocation, received by the reception means,
- a selection of acoustic pseudo-distances determined by the determination means.
